# EUROPEAN PATENT APPLICATION

(11) **EP 3 725 590 A1**
(43) Date of publication of application: **21.10.2020**
(21) Application number: 18887332.7
(22) Date of filing: 12.12.2018
(51) Int. Cl.: B60N 2/90, B60N 3/06, B60N 2/02

(54) **BEARING MEMBER CONTROL SYSTEM AND METHOD FOR USE IN VEHICLE**

(30) Priority: 15.12.2017 CN 201711352680
(71) Applicant: Nio Nextev Limited, Hong Kong (CN)
(72) Inventor: GONG, Haining, Shanghai 201804 (CN); JIN, Bei, Shanghai 201804 (CN); FU, Litao, Shanghai 201804 (CN); DONG, Yiwei, Shanghai 201804 (CN); WANG, Jingjie, Shanghai 201804 (CN)
(74) Representative: Vossius & Partner Patentanwälte Rechtsanwälte mbB
(86) International application number: PCT/CN2018/120431
(87) International publication number: WO 2019/114717

(57) **Abstract**

Disclosed are a system and method for controlling a bearing member for use in a vehicle, solving the problem in which existing bearing members of automobiles have no automatic adjustment function and are thus easy to cause inconvenience to a passenger getting on or off a vehicle. The system for controlling a bearing member comprises a bearing member controller. The method for controlling a bearing member comprises: acquiring an open/closed state of a vehicle door, a start/stop state of a vehicle, and a collision condition of the vehicle by means of the bearing member controller. If the vehicle door is opened, the vehicle is in a stopped state, and the vehicle has not been collided, it indicates that the passenger has a need to get off the vehicle and that the vehicle is already stopped in a safe state. In this case, the bearing member controller can control the bearing member such that same automatically returns to an initial position, so as to effectively guarantee that the passenger may get off the vehicle conveniently without the need for manually controlling the bearing member such that same returns to the initial position, thereby improving the riding experience of the passenger.

## Description

### Technical Field

The invention relates to the technical field of automobiles, and particularly provides a system and method for controlling a bearing member for use in a vehicle.

### Background Art

With the continuous improvement of people's living standards, automobiles have gradually become an indispensable part of people's daily life. With the rapid development of the automotive industry, users have begun to put forward higher and higher requirements for the comfort of automobiles. Specifically, many existing automobiles are provided with leg rests. The leg rest is usually connected to a vehicle seat. During the driving of an automobile, a passenger can place his/her leg on the leg rest, so that his/her leg can be fully extended to greatly improve the comfort of the automobile.

Further, the position of the leg rest of the existing automobile must be manually controlled and adjusted by the passenger. If the passenger adjusts the leg rest to a higher position during the ride, the passenger must adjust the leg rest back to a bottom position again if getting off the vehicle in order to be easy to get off the vehicle. Or if the previous passenger adjusts the leg rest to a higher position during the ride, but the passenger does not adjust the leg rest back to the bottom position when getting off the vehicle, in this case, the next passenger when getting on the vehicle must first adjust the leg rest to the bottom position before easily getting on the vehicle.

Accordingly, there is a need in the art for a new system and method for controlling a bearing member for use in a vehicle to solve the above problems.

### Summary of the Invention

In view of this, the invention provides a method for controlling a bearing member for use in a vehicle, and the method for controlling a bearing member comprises the following steps of: acquiring the state of the vehicle; and selectively adjusting, according to the state of the vehicle, the position of the bearing member. As an example, the bearing member may be a leg rest.

In the above technical solution of the method for controlling a bearing member for use in a vehicle, the vehicle comprises a vehicle door, and the step of acquiring the state of the vehicle specifically comprises: acquiring an open/closed state of the vehicle door; and the step of selectively adjusting, according to the state of the vehicle, the position of the bearing member specifically comprises: selectively adjusting, according to the open/closed state of the vehicle door, the position of the bearing member.

In the above technical solution of the method for controlling a bearing member for use in a vehicle, the step of selectively adjusting, according to the open/closed state of the vehicle door, the position of the bearing member specifically comprises: if the vehicle door is opened, causing the bearing member to return to an initial position.

In the above technical solution of the method for controlling a bearing member for use in a vehicle, the step of acquiring the state of the vehicle also comprises: on the basis of acquiring an open/closed state of the vehicle door, acquiring a start/stop state of the vehicle; and the step of selectively adjusting, according to the state of the vehicle, the position of the bearing member further comprises: selectively adjusting, according to the open/closed state of the vehicle door and the start/stop state of the vehicle, the position of the bearing member.

In the above technical solution of the method for controlling a bearing member for use in a vehicle, the step of selectively adjusting, according to the open/closed state of the vehicle door and the start/stop state of the vehicle, the position of the bearing member still further comprises: if the vehicle door is opened, and the vehicle is in a stopped state, causing the bearing member to return to an initial position.

In the above technical solution of the method for controlling a bearing member for use in a vehicle, the step of acquiring the state of the vehicle also comprises: on the basis of acquiring the open/closed state of the vehicle door and the start/stop state of the vehicle, further acquiring a collision condition of the vehicle; and the step of selectively adjusting, according to the state of the vehicle, the position of the bearing member still further comprises: according to the open/closed state of the vehicle door, the start/stop state of the vehicle, and the collision condition of the vehicle, selectively adjusting the position of the bearing member.

In the above technical solution of the method for controlling a bearing member for use in a vehicle, the step of according to the open/closed state of the vehicle door, the start/stop state of the vehicle, and the collision condition of the vehicle, selectively adjusting the position of the bearing member furthermore comprises: if the vehicle door is opened, the vehicle is in a stopped state, and the vehicle has not been collided, causing the bearing member to return to an initial position.

In the above technical solution of the method for controlling a bearing member for use in a vehicle, the step of acquiring the state of the vehicle also comprises: on the basis of acquiring the open/closed state of the vehicle door, the start/stop state of the vehicle, and the collision condition of the vehicle, further acquiring the current position of the bearing member; and the step of selectively adjusting, according to the state of the vehicle, the position of the bearing member also further comprises: according to the open/closed state of the vehicle door, the start/stop state of the vehicle, the collision condition of the vehicle, and the current position of the bearing member, selectively adjusting the position of the bearing member.

In the above technical solution of the method for controlling a bearing member for use in a vehicle, the step of according to the open/closed state of the vehicle door, the start/stop state of the vehicle, the collision condition of the vehicle, and the current position of the bearing member, selectively adjusting the position of the bearing member furthermore comprises: if the vehicle door is opened, the vehicle is in a stopped state, the vehicle has not been collided, and the bearing member is not in an initial position, causing the bearing member to return to the initial position.

In the above technical solution of the method for controlling a bearing member for use in a vehicle, before the step of acquiring the state of the vehicle, the method for controlling a bearing member also comprises: acquiring whether an automatic adjustment function of the bearing member is ON; and the step of acquiring the state of the vehicle specifically comprises: acquiring the state of the vehicle if the automatic adjustment function of the bearing member is in an ON state.

Those skilled in the art can understand that, in the technical solution of the method for controlling a bearing member for use in a vehicle of the invention, the method for controlling a bearing member comprises: acquiring the open/closed state of the vehicle door to effectively determine whether a passenger has a need to get off; acquiring the start/stop state of the vehicle to effectively determine whether the passenger is ready to get off in a safe state; and acquiring the collision condition of the vehicle to effectively determine whether the automatic lowering of the bearing member will cause secondary injury to the passenger. If the vehicle door is opened, the vehicle is in a stopped state, and the vehicle has not been collided, it indicates that the passenger has a need to get off the vehicle and that the vehicle is already stopped in a safe state. In this case, the bearing member is caused to automatically return to an initial position, so as to effectively guarantee that the passenger may get off the vehicle conveniently without the need for manually controlling the bearing member such that same returns to the initial position, thereby greatly improving the riding experience of the passenger.

The invention also provides a system for controlling a bearing member for use in a vehicle. the system for controlling a bearing member comprises a bearing member controller, which is used to carry out the following operations: acquiring the state of the vehicle; and selectively adjusting, according to the state of the vehicle, the position of the bearing member.

In the above technical solution of the system for controlling a bearing member for use in a vehicle, the vehicle comprises a vehicle door, and in the operation of acquiring the state of the vehicle, the bearing member controller acquires an open/closed state of the vehicle door; and in the operation of selectively adjusting, according to the state of the vehicle, the position of the bearing member, the bearing member controller selectively adjusts, according to the open/closed state of the vehicle door, the position of the bearing member.

In the above technical solution of the system for controlling a bearing member for use in a vehicle, in the operation of selectively adjusting, according to the open/closed state of the vehicle door, the position of the bearing member, if the vehicle door is opened, the bearing member controller causes the bearing member to return to an initial position.

In the above technical solution of the system for controlling a bearing member for use in a vehicle, in the operation of acquiring the state of the vehicle, and on the basis of acquiring the open/closed state of the vehicle door, the bearing member controller also acquires a start/stop state of the vehicle; and in the operation of selectively adjusting, according to the state of the vehicle, the position of the bearing member, the bearing member controller selectively adjusts, according to the open/closed state of the vehicle door and the start/stop state of the vehicle, the position of the bearing member.

In the above technical solution of the system for controlling a bearing member for use in a vehicle, in the operation of selectively adjusting, according to the open/closed state of the vehicle door and the start/stop state of the vehicle, the position of the bearing member, if the vehicle door is opened and the vehicle is in a stopped state, the bearing member controller causes the bearing member to return to the initial position.

In the above technical solution of the system for controlling a bearing member for use in a vehicle, in the operation of acquiring the state of the vehicle, and on the basis of acquiring the open/closed state of the vehicle door and the start/stop state of the vehicle, the bearing member controller further acquires a collision condition of the vehicle; and in the operation of selectively adjusting, according to the state of the vehicle, the position of the bearing member, the bearing member controller selectively adjusts the position of the bearing member according to the open/closed state of the vehicle door, the start/stop state of the vehicle, and the collision condition of the vehicle.

In the above technical solution of the system for controlling a bearing member for use in a vehicle, in the operation of selectively adjusting the position of the bearing member according to the open/closed state of the vehicle door, the start/stop state of the vehicle, and the collision condition of the vehicle, if the vehicle door is opened, the vehicle is in the stopped state, and the vehicle has not been collided, the bearing member controller causes the bearing member to return to the initial position.

In the above technical solution of the system for controlling a bearing member for use in a vehicle, in the operation of acquiring the state of the vehicle, and on the basis of acquiring the open/closed state of the vehicle door, the start/stop state of the vehicle, and the collision condition of the vehicle, the bearing member controller further acquires the current position of the bearing member; and in the operation of selectively adjusting, according to the state of the vehicle, the position of the bearing member, the bearing member controller selectively adjusts the position of the bearing member according to the open/closed state of the vehicle door, the start/stop state of the vehicle, the collision condition of the vehicle, and the current position of the bearing member.

In the above technical solution of the system for controlling a bearing member for use in a vehicle, in the operation of selectively adjusting the position of the bearing member according to the open/closed state of the vehicle door, the start/stop state of the vehicle, the collision condition of the vehicle, and the current position of the bearing member, if the vehicle door is opened, the vehicle is in the stopped state, the vehicle has not been collided, and the bearing member is not in the initial position, the bearing member controller causes the bearing member to return to the initial position.

In the above technical solution of the system for controlling a bearing member for use in a vehicle, before the operation of acquiring the state of the vehicle, the bearing member controller also acquires whether an automatic adjustment function of the bearing member is ON; and in the operation of acquiring the state of the vehicle, if the automatic adjustment function of the bearing member is in an ON state, the bearing member controller acquires the state of the vehicle.

In the above technical solution of the system for controlling a bearing member for use in a vehicle, the bearing member is a leg rest and/or foot rest of the vehicle.

Those skilled in the art can understand that, in the technical solution of the system for controlling a bearing member for use in a vehicle of the invention, the system for controlling a bearing member of the invention comprises a bearing member controller; the bearing member controller can acquire the open/closed state of the vehicle door to effectively determine whether a passenger has a need to get off; the bearing member controller can also acquire the start/stop state of the vehicle to effectively determine whether the passenger is ready to get off in a safe state; and In addition, the bearing member controller can also acquire the collision condition of the vehicle to effectively determine whether the automatic lowering of the bearing member will cause secondary injury to the passenger. If the vehicle door is opened, the vehicle is in a stopped state, and the vehicle has not been collided, it indicates that the passenger has a need to get off the vehicle and that the vehicle is already stopped in a safe state. In this case, the bearing member controller can cause the bearing member to automatically return to an initial position, so as to effectively guarantee that the passenger may get off the vehicle conveniently without the need for manually controlling the bearing member such that same returns to the initial position, thereby greatly improving the riding experience of the passenger.

### Brief Description of the Drawings

Fig. 1 is a flowchart of main steps of a method for controlling a bearing member for use in a vehicle of the invention;
Fig. 2 is a flowchart of steps of a first embodiment of the method for controlling a bearing member for use in a vehicle of the invention;
Fig. 3 is a flowchart of steps of a second embodiment of the method for controlling a bearing member for use in a vehicle of the invention;
Fig. 4 is a flowchart of steps of a third embodiment of the method for controlling a bearing member for use in a vehicle of the invention; and
Fig. 5 is a flowchart of steps of a fourth embodiment of the method for controlling a bearing member for use in a vehicle of the invention.

### Detailed Description of Embodiments

Embodiments of the invention will be described below with reference to the accompanying drawings. It should be understood by those skilled in the art that these embodiments are only for explaining the technical principles of the invention and are not intended to limit the scope of protection of the invention. For example, although each step of the method of the invention is described in a specific order in this application, these orders are not to be regarded in a restrictive sense. Without departing from the basic principles of the invention, those skilled in the art may perform the steps in different orders.

Based on the problem proposed in the background art that the leg rest of the existing automobile has no automatic adjustment function and is easy to cause inconvenience to a passenger getting on or off a vehicle and thus greatly affects the user experience, the invention provides a method and system for controlling a bearing member for use in a vehicle. With the method for controlling a bearing member, an operation intention of the passenger can be effectively inferred by acquiring different states of the vehicle, and then the position of the bearing member is adjusted accordingly, thus effectively improving the passenger's riding experience.

The system for controlling a bearing member for use in a vehicle of the invention comprises a bearing member controller, which can acquire the state of the vehicle, and selectively adjusts, according to the state of the vehicle, the position of the bearing member. Specifically, the bearing member controller can acquire an open/closed state of the vehicle door, a start/stop state of the vehicle, and a collision condition of the vehicle; and the bearing member controller, according to the open/closed state of the vehicle door, the start/stop state of the vehicle, and the collision condition of the vehicle, can also selectively adjust the position of the bearing member. Further, the bearing member controller can also acquire whether an automatic adjustment function of the bearing member is ON and the position of the bearing member, and the bearing member controller can selectively acquire, according to whether the bearing member is in an initial position, whether the automatic adjustment function of the bearing member is ON. In addition, the bearing member controller can also selectively acquire the state of the vehicle according to whether the automatic adjustment function of the bearing member is in an ON state.

Those skilled in the art can understand that, the bearing member controller may be a control module in a vehicle-mounted ECU (vehicle electronic control unit), or may be a separately provided bearing member controller. Preferably, the passenger may turn on or off the automatic adjustment function of the bearing member through the vehicle's HMI (automotive human-machine interaction system). Of course, further preferably, the passenger may also turn on or off the automatic adjustment function of the bearing member through other mobile terminals. In addition, it should be noted that the invention does not limit the adjustment method for the bearing member, for example, the position of the bearing member can be adjusted by means of rotation or lifting.

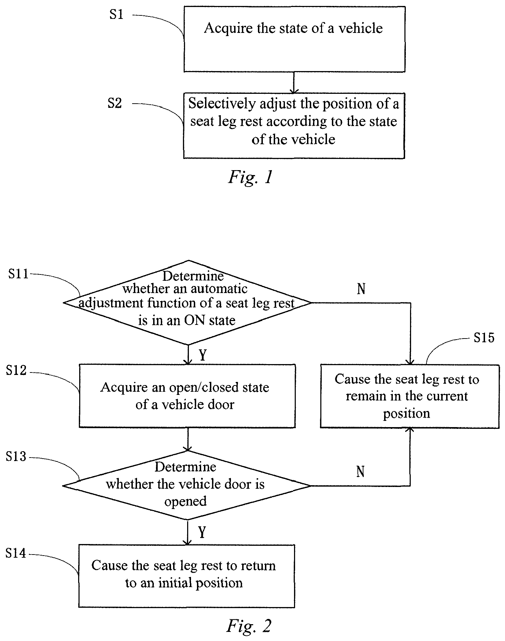

It should be noted that the case where the bearing member is a seat leg rest will be described below in detail, however, the bearing member may also obviously be a member having a bearing function, such as a foot rest of the vehicle. First, referring to Fig. 1, this figure is a flowchart of main steps of a method for controlling a bearing member for use in a vehicle of the invention. In a specific example, a leg rest is used as an example of the bearing member. As shown in Fig. 1, the method for controlling a bearing member mainly comprises the following steps of:
S1: acquiring the state of a vehicle; and
S2: selectively adjusting, according to the state of the vehicle, the position of a seat leg rest.

It can be understood that, in step S1, the bearing member controller can acquire the state of the vehicle; and then in step S2, the bearing member controller can effectively infer the passenger's operation intention according to different states of the vehicle, and then selectively adjust the position of the seat leg rest, so as to effectively solve the problem that the seat leg rest of the existing automobile has no automatic adjustment function and is easy to cause inconvenience to a passenger getting on or off a vehicle and thus greatly improves the riding experience of the passenger.

Then referring to Fig. 2, this figure shows a flowchart of steps of a first embodiment of the method for controlling a bearing member for use in a vehicle of the invention. As shown in Fig. 2, the first embodiment of the method for controlling a bearing member specifically comprises the following steps of:
S11: determining whether an automatic adjustment function of the seat leg rest is in an ON state; if so, proceeding to step S12; or if not, proceeding to step S15;
S12: acquiring an open/closed state of a vehicle door;
S13: determining whether the vehicle door is opened; if so, proceeding to step S14; or if not, proceeding to step S15;
S14: causing the seat leg rest to return to the initial position; and
S15: causing the seat leg rest to remain in the current position.

Further, in step S11, the bearing member controller can determine whether the automatic adjustment function of the seat leg rest is in an ON state. Different passengers may have different usage requirements, so when a passenger does not want to use this function, the passenger may turn off this function in the vehicle's HMI or other mobile terminals, so that the bearing member control system can provide different operations based on the passenger's usage requirements, thereby effectively improving the usage experience of the passenger. Specifically, if this function is turned off, the bearing member controller can cause the seat leg rest to remain in the current position. At the same time, if this function is turned on, the bearing member controller also needs to further acquire other states of the vehicle in order to fully understand the passenger's operation requirements. It should be noted that the bearing member controller can detect the open/closed state of the vehicle door via an infrared sensor provided on the vehicle door. Of course, the technician can also detect the open/closed state of the vehicle door in another way.

Further, in step S12, the bearing member controller can acquire the open/closed state of the vehicle door. It can be understood that, if the passenger opens the vehicle door, it indicates that the passenger has the need to get off; and at the same time, if the passenger does not open the vehicle door, it indicates that the passenger must have no need to get off. Therefore, in step S13, the bearing member controller needs to perform different operation steps according to whether the vehicle door is opened. Specifically, if the vehicle door is opened, it indicates that the passenger has the need to get off; and in this case, proceed to step S14: the bearing member controller controls the seat leg rest such that same returns to an initial position, so that the passenger gets off the vehicle, thereby effectively solving the problem that the seat leg rest of the existing automobile has no automatic adjustment function and is easy to cause inconvenience to a passenger getting on or off a vehicle and thus maximizes the riding experience of the passenger. However, if the vehicle door is not opened, it indicates that the passenger has no need to get off, in this case, proceed to step S15: the bearing member controller controls the seat leg rest such that same remains in the current position, thereby effectively saving operation steps. It should be noted that the vehicle door in this embodiment is the vehicle door adjacent to the seat leg rest.

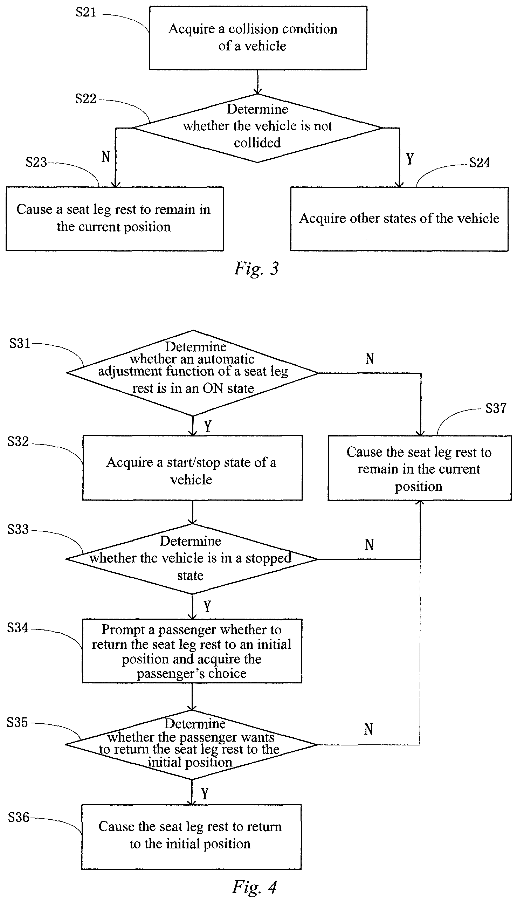

Then referring to Fig. 3, this figure shows a flowchart of steps of a second embodiment of the method for controlling a bearing member for use in a vehicle of the invention. As shown in Fig. 3, the second embodiment of the method for controlling a bearing member specifically comprises the following steps of:
S21: acquiring the collision condition of the vehicle;
S22: determining whether the vehicle has not been collided; if not, proceeding to step S23; and if so, proceeding to step S24;
S23: causing the seat leg rest to remain in the current position; and
S24: acquiring other states of the vehicle.

Further, in step S21, the bearing member controller can acquire the collision condition of the vehicle. If the vehicle collides, it is highly likely that the passenger's leg has been injured, and if the seat leg rest is rashly lowered in this case, it is very likely to cause secondary injury to the passenger; and at the same time, if the vehicle does not collide, the bearing member controller also needs to further acquire other states of the vehicle in order to effectively determine the passenger's operation requirements. It should be noted that the bearing member controller can detect whether the vehicle collides through a vehicle radar. Of course, the technician can also set by himself/herself a method of detecting whether the vehicle collides according to actual products.

Specifically, in step S22, the bearing member controller can perform different operation steps according to the collision condition of the vehicle. Further, if the vehicle is collided, in this case, it is very likely that the passenger's leg has been injured, and if the seat leg rest is rashly returned to the initial position, it is very likely to cause secondary injury to the passenger's leg. Therefore, proceed to step S23, that is, the bearing member controller controls the seat leg rest such that same remains in the current position, so as to effectively avoid the second injury to the passenger's leg, thus maximizing the protection for passenger safety. At the same time, if the vehicle is not collided, the bearing member controller needs to further acquire other states of the vehicle in order to effectively determine the passenger's operation requirements. In this case, proceed to step S24, i.e. acquiring other states of the vehicle, so that the bearing member controller can further determine the passenger's operation requirements according to the other states of the vehicle.

Then referring to Fig. 4, this figure shows a flowchart of steps of a third embodiment of the method for controlling a bearing member for use in a vehicle of the invention. As shown in Fig. 4, the third embodiment of the method for controlling a bearing member specifically comprises the following steps of:
S31: determining whether an automatic adjustment function of the seat leg rest is in an ON state; if so, proceeding to step S32; or if not, proceeding to step S37;
S32: acquiring the start/stop state of the vehicle;
S33: determining whether the vehicle is in a stopped state; if so, proceeding to step S34; or if not, proceeding to step S37;
S34: prompting the passenger whether to return the seat leg rest to the initial position and acquiring the passenger's choice;
S35: determining whether the user wants to return the seat leg rest to the initial position; if so, proceeding to step S36; or if not, proceeding to step S37;
S36: causing the seat leg rest to return to the initial position; and
S37: causing the seat leg rest to remain in the current position.

Further, in step S31, the bearing member controller can determine whether the automatic adjustment function of the seat leg rest is in an ON state. Different passengers may have different usage requirements, so when a passenger does not want to use this function, the passenger may turn off this function in the vehicle's HMI or other mobile terminals, so that the bearing member control system can provide different operations based on the passenger's usage requirements, thereby effectively improving the usage experience of the passenger. Specifically, if this function is turned off, the bearing member controller can cause the seat leg rest to remain in the current position. At the same time, if this function is turned on, the bearing member controller also needs to further acquire other states of the vehicle in order to fully understand the passenger's operation requirements. It can be understood that, step S31 is only an optional method in this embodiment. In other words, the bearing member controller may not determine whether the automatic adjustment function of the seat leg rest is in an ON state. It should be noted that the bearing member controller can detect the start/stop state of the vehicle through an acceleration sensor and wheel speed sensor of the vehicle. Of course, the technician can also set other methods according to actual product requirements to detect the start/stop state of the vehicle.

Specifically, in step S32, the bearing member controller can acquire the start/stop state of the vehicle. Since it is very dangerous for the passenger to get off the vehicle when the vehicle is not stopped, the position of the seat leg rest should not be adjusted if the vehicle is not stopped steadily. In step S33, the bearing member controller can perform different operation steps by determining whether the vehicle is in a stopped state. If the vehicle is not in the stopped state, getting off the vehicle in this case is very likely to cause a serious threat to the life and safety of the passenger. Therefore, proceed to step S37, that is, the bearing member controller does not adjust the position of the seat leg rest, in order to remind the passenger not to rashly get off the vehicle when the vehicle is not stopped, at the same time, the vehicle can also remind the passenger in another way: don't get off the vehicle if it is not stopped. If the vehicle has been stopped, it is also necessary for the bearing member controller to effectively determine the reason for stopping the vehicle. For example, the vehicle may only stop briefly at an intersection, or it may stop for a long time in a parking space. Therefore, in step S34, the bearing member controller can prompt the passenger whether it is necessary to return the seat leg rest to the initial position and acquire the passenger's choice, so as to effectively determine the passenger's operation intention. Those skilled in the art can understand that, the step of prompting the passenger to choose whether it is necessary to return the seat leg rest to the initial position is only an optional solution, and the bearing member controller may also directly return the seat leg rest to the initial position without prompting the passenger to choose.

Further, in step S35, the bearing member controller can determine whether the passenger wants to return the seat leg rest to the initial position according to the passenger's choice. If the passenger wants to return the seat leg rest to the initial position, proceed to step S36, that is, the bearing member controller causes the seat leg rest to return to the initial position; and at the same time, if the passenger does not want to return the seat leg rest to the initial position, proceed to step S37, that is, the bearing member controller causes the seat leg rest to remain in the current position, so as to carry out the operation in accordance with the wishes of the passenger to the greatest extent, and to effectively facilitate user operation.

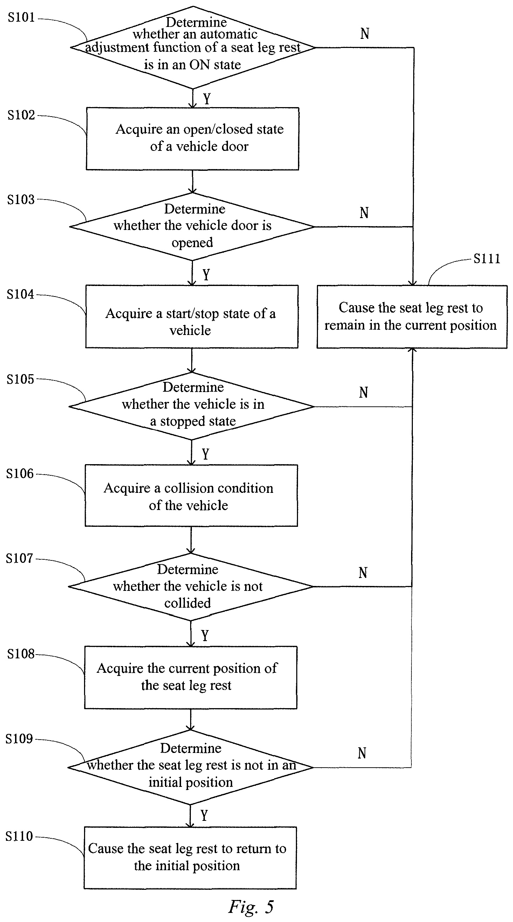

Then referring to Fig. 5, this figure shows a flowchart of steps of a fourth embodiment of the method for controlling a bearing member for use in a vehicle of the invention. The following will describe in detail the case where the fourth embodiment of the method for controlling a bearing member of the invention is carried out by the system for controlling a bearing member of the invention with reference to Fig. 5. As shown in Fig. 5, the fourth embodiment of the method for controlling a bearing member specifically comprises the following steps of:
S101: determining whether an automatic adjustment function of the seat leg rest is in an ON state; if so, proceeding to step S102; or if not, proceeding to step S111;
S102: acquiring an open/closed state of a vehicle door;
S103: determining whether the vehicle door is opened; if so, proceeding to step S104; or if not, proceeding to step S111;
S104: acquiring the start/stop state of the vehicle;
S105: determining whether the vehicle is in a stopped state; if so, proceeding to step S106; or if not, proceeding to step S111;
S106: acquiring the collision condition of the vehicle;
S107: determining whether the vehicle has not been collided; if so, proceeding to step S108; or if not, proceeding to step S111;
S108: acquiring the current position of the seat leg rest;
S109: determining whether the seat leg rest is not in the initial position; if so, proceeding to step S110; or if not, proceeding to step Sill;
S110: causing the seat leg rest to return to the initial position; and
S111: causing the seat leg rest to remain in the current position.

Further, in step S101, the bearing member controller can determine whether the automatic adjustment function of the seat leg rest is in an ON state. Different passengers may have different usage requirements, so when a passenger does not want to use this function, the passenger may turn off this function in the vehicle's HMI or other mobile terminals, so that the bearing member control system can provide different operations based on the passenger's usage requirements, thereby effectively improving the usage experience of the passenger. Specifically, if this function is turned off, the bearing member controller can cause the seat leg rest to remain in the current position. At the same time, if this function is turned on, the bearing member controller also needs to further acquire other states of the vehicle in order to fully understand the passenger's operation requirements.

Further, in step S102, the bearing member controller can acquire the open/closed state of the vehicle door. It can be understood that, if the passenger opens the vehicle door, it indicates that the passenger may have the need to get off; and at the same time, if the passenger does not open the vehicle door, it indicates that the passenger must have no need to get off. Therefore, in step S103, the bearing member controller needs to perform different operation steps according to whether the vehicle door is opened. Specifically, if the vehicle door is not opened, it indicates that the passenger has no need to get off, in this case, proceeding to step S111: the bearing member controller controls the seat leg rest such that same remains in the current position, thereby effectively saving operation steps. If the vehicle door is opened, it indicates that the passenger may have the need to get off the vehicle, in this case, the bearing member controller also needs to effectively determine other states of the vehicle, i.e. proceeding to step S104. It can be understood that the vehicle door in this embodiment is the vehicle door adjacent to the seat leg rest.

Further, in step S104, the bearing member controller can acquire the start/stop state of the vehicle. Since it is very dangerous for the passenger to get off the vehicle when the vehicle is not stopped, the position of the seat leg rest should not be adjusted if the vehicle is not stopped. Specifically, in step S105, the bearing member controller can perform different operation steps by determining whether the vehicle is in a stopped state. If the vehicle is not in the stopped state, getting off the vehicle in this case is very likely to cause a serious threat to the life and safety of the passenger. Therefore, proceed to step Sill, that is, the bearing member controller does not adjust the position of the seat leg rest, in order to remind the passenger not to rashly get off the vehicle when the vehicle is not stopped, at the same time, the vehicle can also remind the passenger in another way: don't get off the vehicle if it is not stopped. If the vehicle has been stopped, it is also necessary for the bearing member controller to effectively determine the reason for stopping the vehicle in order to choose an optimal operation step.

Further, if the vehicle door is opened, and the vehicle is in a stopped state, proceed to step S106, that is, the bearing member controller can acquire the collision condition of the vehicle, so as to effectively determine the reason for stopping the vehicle. It can be understood that, if the vehicle collides and is in a stopped state, it is highly likely that the passenger's leg has been injured, and if the seat leg rest is rashly lowered in this case, it is very likely to cause secondary injury to the passenger; and if the vehicle does not collide, it indicates that the driver has parked safely. At the same time, since the passenger has opened the vehicle door, the passenger has the need to get off and can get off safely.

Specifically, in step S107, the bearing member controller can perform different operation steps according to the collision condition of the vehicle. Further, if the vehicle is collided, it indicates that the vehicle is not parked safely. In this case, it is very likely that the passenger's leg has been injured, and if the seat leg rest is rashly returned to the initial position, it is very likely to cause secondary injury to the passenger's leg. Therefore, proceed to step S111, that is, the bearing member controller controls the seat leg rest such that same remains in the current position, so as to effectively avoid the second injury to the passenger's leg, thus maximizing the protection for passenger safety. At the same time, if the vehicle has not been collided, it indicates that the driver has parked safely, in this case, the bearing member controller determines that the passenger has the need to get off under safe conditions, then proceed to step S108, i.e. acquiring the current position of the seat leg rest, in order to further effectively determine whether the seat leg rest needs to return to the initial position.

It should be noted that the seat leg rest also has a manual adjustment function, that is, the passenger can also adjust himself/herself the position of the seat leg rest according to the use requirements. Preferably, the manual adjustment function of the seat leg rest has priority over the automatic adjustment function of the seat leg rest, that is, when the passenger manually adjusts the seat leg rest, the automatic adjustment action of the seat leg rest will be interrupted, so that the adjustment of the seat leg rest can always follow the wishes of the passenger, thereby effectively improving the riding experience. In addition, the passenger can also adjust the position of the seat leg rest at any time through the manual adjustment function. For example, when the vehicle is stopped due to a collision, the rescuer opens the vehicle door, and the system for controlling a bearing member remains the seat leg rest in the current position in order to avoid secondary injury to the passenger; However, after the rescuer opens the vehicle door, the rescuer can adjust the seat leg rest to the best rescue position by manual adjustment, so as to treat the injured passenger in time, thereby effectively improving the safety performance of the vehicle.

Further, in step S108, the bearing member controller can acquire the current position of the seat leg rest. It can be understood that, if the seat leg rest is originally located in the initial position, there is no need to adjust the position of the seat leg rest. Therefore, in step S109, the bearing member controller needs to determine whether the seat leg rest is not in the initial position, so as to effectively determine whether the position of the seat leg rest also needs to be adjusted according to the current position of the seat leg rest.

Specifically, in step S109, if the seat leg rest is originally located in the initial position, it indicates that when the seat leg rest is in the current position, it does not affect the passenger getting off the vehicle. In this case, the bearing member controller does not need to adjust the position of the seat leg rest, i.e. proceeding to step S111: causing the seat leg rest to remain in the current position, so that the operations can be effectively saved in the case of effectively ensuring that the passenger can get off the vehicle conveniently. At the same time, if the seat leg rest is not in the initial position, it indicates that the bearing member controller needs to retract the seat leg rest to the initial position. In this case, proceed to step S110, the bearing member controller controls the seat leg rest such that same returns to an initial position, so that the passenger gets off the vehicle, thereby effectively solving the problem that the seat leg rest of the existing automobile has no automatic adjustment function and is easy to cause inconvenience to a passenger getting on or off a vehicle and thus maximizing the riding experience of the passenger. It should be noted that the initial position of the seat leg rest can be set by the technician according to actual usage by himself/herself.

Finally, it should be noted that since the bearing member controller runs the control method of the invention, the process of controlling the foot rest is the same as the process of controlling the leg rest, which will not be repeated here. At the same time, since many judgment conditions in the method for controlling a bearing member of the invention are parallel judgment conditions, the technician can adjust by himself/herself the order of some of the steps in the method for controlling a bearing member according to actual usage, for example, steps S103 and S105 and steps S103 and S107 can be changed in order. In other words, the above embodiments are all embodiments of the invention and are not intended to limit the scope of protection of the invention. When those skilled in the art actually uses the invention, some of the steps may be added or deleted as appropriate, or the orders in which different steps are performed may be changed. This change does not go beyond the basic principles of the invention and falls within the scope of protection of the invention.

Heretofore, the technical solutions of the invention have been described with reference to the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention.

## Claims

1. A method for controlling a bearing member for use in a vehicle, **characterized in that** the method for controlling a bearing member comprises the following steps of:
acquiring the state of the vehicle; and
selectively adjusting, according to the state of the vehicle, the position of the bearing member.

2. The method for controlling a bearing member for use in a vehicle according to claim 1, **characterized in that** the vehicle comprises a vehicle door, and the step of acquiring the state of the vehicle specifically comprises:
acquiring an open/closed state of the vehicle door; and
the step of selectively adjusting, according to the state of the vehicle, the position of the bearing member specifically comprises:
selectively adjusting, according to the open/closed state of the vehicle door, the position of the bearing member.

3. The method for controlling a bearing member for use in a vehicle according to claim 2, **characterized in that** the step of selectively adjusting, according to the open/closed state of the vehicle door, the position of the bearing member specifically comprises:
if the vehicle door is opened, causing the bearing member to return to an initial position.

4. The method for controlling a bearing member for use in a vehicle according to claim 2, **characterized in that** the step of acquiring the state of the vehicle also comprises:
on the basis of acquiring an open/closed state of the vehicle door, acquiring a start/stop state of the vehicle; and
the step of selectively adjusting, according to the state of the vehicle, the position of the bearing member further comprises:
selectively adjusting, according to the open/closed state of the vehicle door and the start/stop state of the vehicle, the position of the bearing member.

5. The method for controlling a bearing member for use in a vehicle according to claim 4, **characterized in that** the step of selectively adjusting, according to the open/closed state of the vehicle door and the start/stop state of the vehicle, the position of the bearing member still further comprises:
if the vehicle door is opened, and the vehicle is in a stopped state, causing the bearing member to return to an initial position.

6. The method for controlling a bearing member for use in a vehicle according to claim 4, **characterized in that** the step of acquiring the state of the vehicle also comprises:
on the basis of acquiring the open/closed state of the vehicle door and the start/stop state of the vehicle, further acquiring a collision condition of the vehicle; and
the step of selectively adjusting, according to the state of the vehicle, the position of the bearing member still further comprises:
according to the open/closed state of the vehicle door, the start/stop state of the vehicle, and the collision condition of the vehicle, selectively adjusting the position of the bearing member.

7. The method for controlling a bearing member for use in a vehicle according to claim 6, **characterized in that** the step of according to the open/closed state of the vehicle door, the start/stop state of the vehicle, and the collision condition of the vehicle, selectively adjusting the position of the bearing member furthermore comprises:
if the vehicle door is opened, the vehicle is in a stopped state, and the vehicle has not been collided, causing the bearing member to return to an initial position.

8. The method for controlling a bearing member for use in a vehicle according to claim 6, **characterized in that** the step of acquiring the state of the vehicle also comprises:
on the basis of acquiring the open/closed state of the vehicle door, the start/stop state of the vehicle, and the collision condition of the vehicle, further acquiring the current position of the bearing member; and
the step of selectively adjusting, according to the state of the vehicle, the position of the bearing member also further comprises:
according to the open/closed state of the vehicle door, the start/stop state of the vehicle, the collision condition of the vehicle, and the current position of the bearing member, selectively adjusting the position of the bearing member.

9. The method for controlling a bearing member for use in a vehicle according to claim 8, **characterized in that** the step of according to the open/closed state of the vehicle door, the start/stop state of the vehicle, the collision condition of the vehicle, and the current position of the bearing member, selectively adjusting the position of the bearing member furthermore comprises:
if the vehicle door is opened, the vehicle is in a stopped state, the vehicle has not been collided, and the bearing member is not in an initial position, causing the bearing member to return to the initial position.

10. The method for controlling a bearing member for use in a vehicle according to any one of claims 1 to 9, **characterized in that** before the step of acquiring the state of the vehicle, the method for controlling a bearing member also comprises:
acquiring whether an automatic adjustment function of the bearing member is ON; and
the step of acquiring the state of the vehicle specifically comprises:
acquiring the state of the vehicle if the automatic adjustment function of the bearing member is in an ON state.

11. A system for controlling a bearing member for use in a vehicle, **characterized in that** the system for controlling a bearing member comprises a bearing member controller, which is used to carry out the following operations:
acquiring the state of the vehicle; and
selectively adjusting, according to the state of the vehicle, the position of the bearing member.

12. The system for controlling a bearing member for use in a vehicle according to claim 11, **characterized in that** the vehicle comprises a vehicle door, and in the operation of acquiring the state of the vehicle, the bearing member controller acquires an open/closed state of the vehicle door; and
in the operation of selectively adjusting, according to the state of the vehicle, the position of the bearing member, the bearing member controller selectively adjusts, according to the open/closed state of the vehicle door, the position of the bearing member.

13. The system for controlling a bearing member for use in a vehicle according to claim 12, **characterized in that** in the operation of selectively adjusting, according to the open/closed state of the vehicle door, the position of the bearing member, if the vehicle door is opened, the bearing member controller causes the bearing member to return to an initial position.

14. The system for controlling a bearing member for use in a vehicle according to claim 13, **characterized in that** in the operation of acquiring the state of the vehicle, and on the basis of acquiring the open/closed state of the vehicle door, the bearing member controller also acquires a start/stop state of the vehicle; and
in the operation of selectively adjusting, according to the state of the vehicle, the position of the bearing member, the bearing member controller selectively adjusts, according to the open/closed state of the vehicle door and the start/stop state of the vehicle, the position of the bearing member.

15. The system for controlling a bearing member for use in a vehicle according to claim 14, **characterized in that** in the operation of selectively adjusting, according to the open/closed state of the vehicle door and the start/stop state of the vehicle, the position of the bearing member, if the vehicle door is opened and the vehicle is in a stopped state, the bearing member controller causes the bearing member to return to the initial position.

16. The system for controlling a bearing member for use in a vehicle according to claim 15, **characterized in that** in the operation of acquiring the state of the vehicle, and on the basis of acquiring the open/closed state of the vehicle door and the start/stop state of the vehicle, the bearing member controller further acquires a collision condition of the vehicle; and
in the operation of selectively adjusting, according to the state of the vehicle, the position of the bearing member, the bearing member controller selectively adjusts the position of the bearing member according to the open/closed state of the vehicle door, the start/stop state of the vehicle, and the collision condition of the vehicle.

17. The system for controlling a bearing member for use in a vehicle according to claim 16, **characterized in that** in the operation of selectively adjusting the position of the bearing member according to the open/closed state of the vehicle door, the start/stop state of the vehicle, and the collision condition of the vehicle, if the vehicle door is opened, the vehicle is in the stopped state, and the vehicle has not been collided, the bearing member controller causes the bearing member to return to the initial position.

18. The system for controlling a bearing member for use in a vehicle according to claim 17, **characterized in that** in the operation of acquiring the state of the vehicle, and on the basis of acquiring the open/closed state of the vehicle door, the start/stop state of the vehicle, and the collision condition of the vehicle, the bearing member controller further acquires the current position of the bearing member; and
in the operation of selectively adjusting, according to the state of the vehicle, the position of the bearing member, the bearing member controller selectively adjusts the position of the bearing member according to the open/closed state of the vehicle door, the start/stop state of the vehicle, the collision condition of the vehicle, and the current position of the bearing member.

19. The system for controlling a bearing member for use in a vehicle according to claim 18, **characterized in that** in the operation of selectively adjusting the position of the bearing member according to the open/closed state of the vehicle door, the start/stop state of the vehicle, the collision condition of the vehicle, and the current position of the bearing member, if the vehicle door is opened, the vehicle is in the stopped state, the vehicle has not been collided, and the bearing member is not in the initial position, the bearing member controller causes the bearing member to return to the initial position.

20. The system for controlling a bearing member for use in a vehicle according to any one of claims 11 to 19, **characterized in that** before the operation of acquiring the state of the vehicle, the bearing member controller also acquires whether an automatic adjustment function of the bearing member is ON; and
in the operation of acquiring the state of the vehicle, if the automatic adjustment function of the bearing member is in an ON state, the bearing member controller acquires the state of the vehicle.

21. The system for controlling a bearing member for use in a vehicle according to any one of claims 11 to 19, **characterized in that** the bearing member is a leg rest
and/or foot rest of the vehicle
